# EUROPÄISCHE PATENTSCHRIFT

(11) **EP 1 204 901 B1**
(45) Veröffentlichungstag und Bekanntmachung des Hinweises auf die Patenterteilung: **08.10.2003**
(21) Anmeldenummer: 00958248.7
(22) Anmeldetag: 12.08.2000
(51) Int. Cl.: G03B 27/52, H04N 1/191, H04N 1/10

(54) **VORRICHTUNG ZUM OPTISCHEN ABTASTEN EINES IM WESENTLICHEN FLACHEN OBJEKTS**
DEVICE FOR OPTICALLY SCANNING AN ESSENTIALLY FLAT OBJECT
DISPOSITIF POUR LE BALAYAGE OPTIQUE D'UN OBJET PRATIQUEMENT PLAT

(30) Priorität: 14.08.1999 DE 19938694
(43) Veröffentlichungstag der Anmeldung: 15.05.2002
(73) Patentinhaber: Cruse, Hermann-A., 53359 Rheinbach (DE)
(72) Erfinder: Cruse, Hermann-A., 53359 Rheinbach (DE)
(74) Vertreter: Gornott, Dietmar, Dipl.-Ing.
(86) Internationale Anmeldenummer: DE0002752
(87) Internationale Veröffentlichungsnummer: WO01013173

(56) Entgegenhaltungen:
- DE-A- 19 711 000
- US-A- 4 667 255
- PATENT ABSTRACTS OF JAPAN vol. 018, no. 246 (E-1546), 11. Mai 1994 (1994-05-11) & JP 06 030201 A (RICOH CO LTD), 4. Februar 1994 (1994-02-04)
- PATENT ABSTRACTS OF JAPAN vol. 018, no. 447 (E-1594), 19. August 1994 (1994-08-19) & JP 06 141146 A (CASIO COMPUT CO LTD), 20. Mai 1994 (1994-05-20)

## Beschreibung

Die Erfindung betrifft eine Vorrichtung zum optischen Abtasten eines im wesentlichen flachen Objekts, bestehend aus einer Beleuchtungseinrichtung zur Beleuchtung des Objekts und einem in einem Abstand über dem feststehenden Objekt angeordneten zeiLenförmigen elektrooptischen Sensor und einem zwischen Objekt und Sensor angeordneten und zur Abbildung eines Objektbsreichs auf den Sensor ausgebildeten Objektiv, wobei Objekt und Sensor relativ zueinander zur zeilenweisen optischen Abtastung des Objekts parallel zur Objektebene linear verfahrbar sind.

Zum elektronischen Einscannen großer Vorlagen, sowie dreidimensionaler flacher Objekte, werden Scanner eingesetzt, die das auf einer horizontal verschieblichen Unterlage angeordnete Objekt mittels einer darüber montierten CCD-Zeile abtasten, während das Objekt unter dieser Aufnahmeanordnung vorbei bewegt wird. Ein derartiger Scanner benötigt wenigstens die doppelte Stellfläche der maximalen Objektfläche, was in vielen Fällen unerwünscht ist.

Bei anderen Modellen ist daher das Objekt fest unterhalb der Aufnahmeanordnung angeordnet, und die innerhalb der Aufnahmeanordnung angeordnete CCD-Zeile ist zum Abtasten des Objekts in einem Scannerkopf horizontal verfahrbar. Das Objekt wird dabei von seitlich der Vorlage installierten Lampen beleuchtet, die jedoch keine gleichmäßige Beleuchtung gewährleisten können, so daß Helligkeitsunterschiede oder sonstige Ungleichmäßigkeiten nicht auszuschließen sind.

Flachbettscanner, wie sie zum Scannen von Papierdokumenten benutzt werden und beispielsweise aus DE 197 11 000 A1 und aus JP 06030201 bekannt sind, sind für flache dreidimensionale Objekte, wie Gemälde oder Bücher, nur sehr bedingt einsetzbar. Ferner sind sie nur für verhältnismäßig geringe Objektgrößen erhältlich.

Ferner ist aus JP 06141146 ein Bildaufnahmegerät bekanntgeworden, bei welchem das aufzunehmende Bild mit Hilfe eines Objektivs auf eine bewegliche CCD-Zeile abgebildet wird, wobei eine synchron dazu bewegliche Lichtzeile, die schräg über ein zweites Objektiv projiziert wird, den jeweils abzutastenden Bereich des Bildes beleuchtet. Dabei verändert sich jedoch die Helligkeit des Bildes mit frotschreitender Abtastung.

Aufgabe der vorliegenden Erfindung ist es, eine Vorrichtung der eingangs genannten Art anzugeben, die zur Verarbeitung großer Objekte geeignet ist, wenig Stellplatz beansprucht und mit welcher ein gleichmäßig helles Bild des Objekts erzeugt werden kann.

Diese Aufgabe wird dadurch gelöst, daß der Sensor in einem an einem Ausleger befestigten Scannerkopf angeordnet ist, daß die Beleuchtungseinrichtung getrennt von dem Sensor linear parallel zur Objektebene in einem Abstand zur Objektoberfläche, der klein ist im Vergleich zum Abstand zwischen Objektoberfläche und Sensor, beweglich geführt und zur Beleuchtung des jeweils abzutastenden zeilenförmigen Objektbereichs ausgebildet ist, und daß die Beleuchtungseinrichtung während des Abtastens derart parallel mit der Sensorbewegung synchronisiert über dem Objekt verfahrbar ist, daß der durch das Objektiv gerade erfaßte und auf den Sensor abgebildete Bereich des Objekts beleuchtet wird.

Aufgrund des geringen Abstands der Leuchtmittel zu dem Objekt wird das Licht der Beleuchtungseinrichtung sehr gut ausgenutzt. Es reichen daher bereits einfache Leuchtröhren zur Beleuchtung aus. Teure Speziallampen, wie sie in anderen Scannern notwendig sind, können entfallen. Die Beleuchtungsstärke des Objekts und damit des erzeugten Bildes ist durch die mit dem Sensor synchrone Bewegung der Beleuchtungseinrichtung sehr gleichmäßig.

Bei der erfindungsgemäßen Vorrichtung kann vorgesehen sein, daß die Beleuchtungseinrichtung zur geichmäßigen Ausleuchtung unregelmäßig dicker Objekte bzw. zur Beeinflussung der Beleuchtungsstärke auch senkrecht zur Objektebene verfahrbar ist. Bei variierend dicken Objekten läßt sich die Beleuchtungseinrichtung damit ferner auch in der Vertikalen nachführen, so daß die Beleuchtungsstärke auch dann gleich bleibt, wenn sich die Dicke des Objekts über dessen Länge ändert.

Außerdem kann die erfindungsgemäße Vorrichtung dadurch weitergebildet sein, daß die Beleuchtungseinrichtung zum Ausgleich des Randabfalls des Objektivs senkrecht zur Objektebene verfahrbar ist. Dazu können entsprechende Objektivdaten in einem Speicher abgelegt sein.

Bei einer vorteilhaften Ausführungsform der Erfindung ist vorgesehen, daß die Beieuchtungseinrichtung aus wenigstens zwei sich quer zur Abtastrichtung wenigstens über die Objektbreite erstreckenden Lampen besteht, deren Licht nach den dem Objekt abgewandten Richtungen abgeschirmt ist und die symmetrisch um den jeweils abzutastenden Objektbereich derart angeordnet sind, daß ein zeilenförmiger Bereich zwischen den Lampen zur Durchführung des vom Objekt in Richtung des Objektivs zurückgestrahlten Lichts freigelassen ist. Durch die symmetrische Beleuchtung des abzutastenden Objektbereichs können auch reliefartig überhöhte Bereiche zweidimensional abgebildet werden, ohne daß sich schattenwürfe auf dem Objekt ausbilden.

Eine weitere Ausgestaltung der Erfindung sieht vor, daß der Sensor eine parallel zur Objektebene linear bewegliche CCD-Zeile ist, auf die die gesamte Breite eines zeilenförmigen Bereichs des Objekts durch das Objektiv abbildbar ist, daß das Objektiv seitenverdrehend ist und daß die Beleuchtungseinrichtung gegenläufig zu dem Sensor verfahrbar ist.

Es ist vorteilhaft, wenn das Objektiv und der Sensor an einem gemeinsamen, vertikal verfahrbar montierten Gehäuse über dem Objekt angeordnet sind, wobei der Abstand des Objektivs zu dem Sensor über einen Auszug variierbar ist. Durch diese Anordnung kann ein beliebiger Ausschnitt des Objekts mittels des Objektivs und durch Verschieben des Objekts auf seiner Unterlage ausgewählt und scharfgestellt werden. Der gesamte Auflösungsbereich des Scanners steht damit auch für Ausschnitte eines Objekts zur Verfügung.

Obwohl bei der erfindungsgemäßen Vorrichtung eine Steuerung der Antriebseinrichtung der Beleuchtungseinrichtung ohne Rückmeldung an sich möglich ist, besteht eine vorteilhafte Ausführungsform darin, daß ein Regler vorgesehen ist, der als Sollwert die mit dem Abbildungsmaßstab umgerechnete jeweilige Position des Sensors und als Istwert ein Signal von einem der Beleuchtungseinrichtung zugeordneten Positionssensor erhält und der eine Antriebseinrichtung für die Beleuchtungseinrichtung steuert. Dadurch ist einerseits eine genaue Nachführung möglich. Andererseits kann dadurch auch vermieden werden, daß die Antriebseinrichtung im Falle einer Behinderung der Bewegung beschädigt wird.

Ausführungsbeispiele der Erfindung sind in der Zeichnung anhand mehrerer Figuren dargestellt und in der nachfolgenden Beschreibung näher erläutert. Es zeigt:
- Fig. 1: einen erfindungsgemäßen Scanner in perspektivischer Darstellung,
- Fig. 2: eine schematische Skizze des Strahlengangs eines erfindungsgemäßen Scanners,
- Fig. 3: eine schematische Explosionsdarstellung eines erfindungsgemäßen Scannerkopfes im Zusammenspiel mit der Beleuchtungseinrichtung und
- Fig. 4: ein Blockschaltbild zur Steüerung eines erfindungsgemäßen Scanners.

Gleiche Teile sind in den Figuren mit gleichen Bezugszeichen versehen.

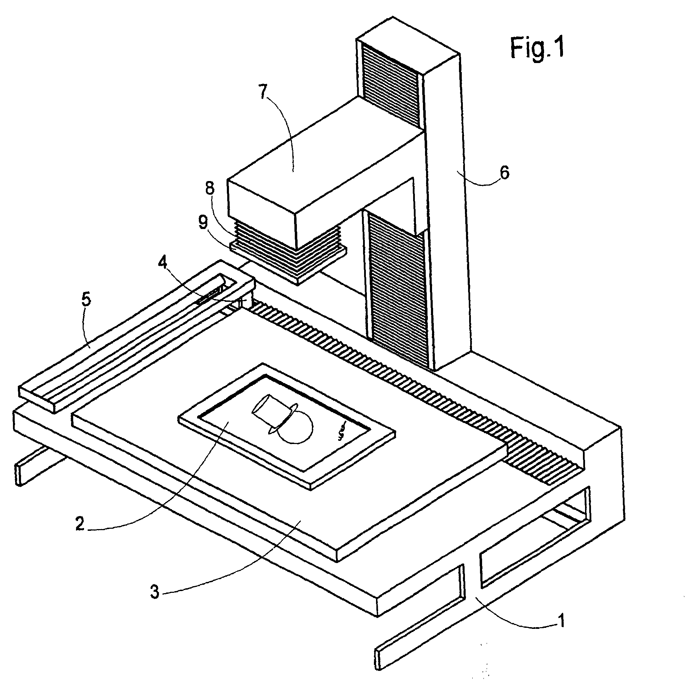

Fig. 1 zeigt einen erfindungsgemäßen Scanner 1, der zum Abtasten eines Gemäldes 2 vorbereitet ist. Das Gemälde 2 ruht auf einem an der Oberfläche mit feinen Öffnungen versehenen Vakuumtisch 3, der das Gemälde 2 mittels eines innerhalb der Tischplatte 3 erzeugten Vakuums festhält. Während des Abtastens wird das Gemälde 2 durch eine längs des Vakuumtisches 3 linear, sowie mittels einer Vertikalführung 4 auch vertikal verschieblichen Beleuchtungsvorrichtung 5 beleuchtet. Die Beleuchtungsvorrichtung 5 wird dazu kontinuierlich über das Gemälde hinwegbewegt, während ein an einem Ausleger 6 vertikal verschieblich angebrachter Scannerkopf 7 das Gemälde 2 zeilenweise abtastet. Nicht dargestellte Lichtschranken verhindern, daß die Beleuchtungsvorrichtung mit dem Gemälde kollidiert, falls sie beim Anfahren des Gemäldes niedriger eingestellt sein sollte, als der Rahmen des Gemäldes dick ist. Zur Fokussierung verfügt der Scannerkopf 7 über ein an einem mittels Faltenbalgauszug 8 verstellbaren Objektivträger befestigtes Objektiv, das hier aus perspektivischen Gründen nicht zu sehen ist.

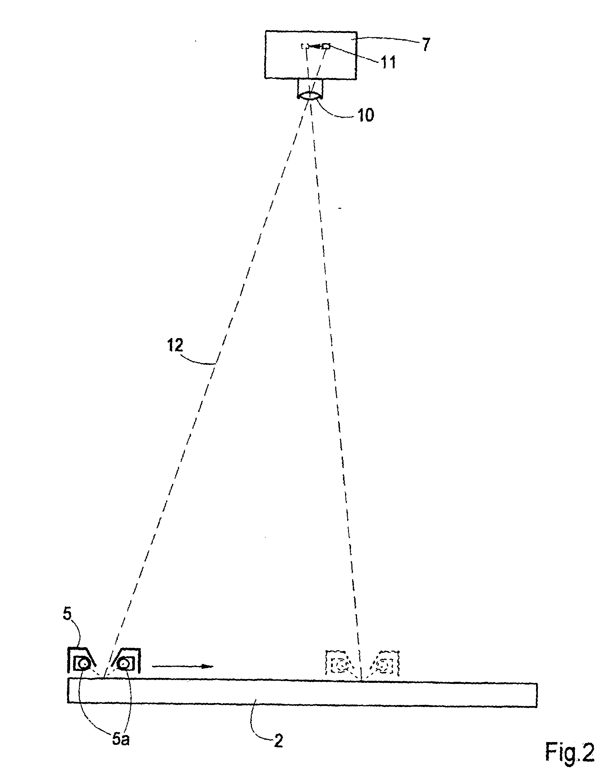

In Fig. 2 ist beispielhaft der Gang eines Lichtstrahls 12 gezeigt, wie er während des Scannens des Gemäldes 2 auftritt. Die in der Mitte offene Beleuchtungsvorrichtung 5, die zwei über die gesamte Breite des Vakuumtisches 3 verlaufende Leuchtröhren 5a beinhaltet, wird kontinuierlich durch einen nicht dargestellten Schrittmotor oder Gleichstrommotor über das Gemälde 2 bewegt. Dabei wird der Bereich zwischen den Leuchtröhren 5a intensiv beleuchtet.

Der über dem Gemälde angebrachte Scannerkopf 7 bildet den zwischen den Leuchtröhren 5a beleuchteten zeilenförmigen Bereich des Gemäldes über ein Objektiv 10 scharf auf eine CCD-Zeile 11 ab, welche in dem Scannerkopf synchron mit der Beleuchtungseinrichtung 5 in Gegenrichtung verschoben wird und dabei das Gemälde zeilenweise abtastet. Die Bewegung der CCD-Zeile ist dabei sehr exakt zu steuern, um Verzerrungen beim Abtasten auszuschließen. Die Bewegung der Beleuchtungseinrichtung braucht nicht so genau gesteuert zu werden - eine ausreichende Breite der Öffnung der Beleuchtungseinrichtung vorausgesetzt. Es ist daher vorteilhaft, wenn die CCD-Zeile genau angesteuert wird und die Beleuchtungseinrichtung dieser Bewegung synchron folgt. Durch die Bewegung der Beleuchtungseinrichtung mit der abtastenden CCD-Zeile wird eine sehr gleichmäßige Helligkeit des Ergebnisses erreicht. Außerdem sind keine weiteren Maßnahmen, wie der Einsatz von Speziallampen, zur Verstärkung der Beleuchtung notwendig, da die Beleuchtung durch die geringe Entfernung zwischen Leuchtröhren und Gemälde 2 bereits sehr stark ist.

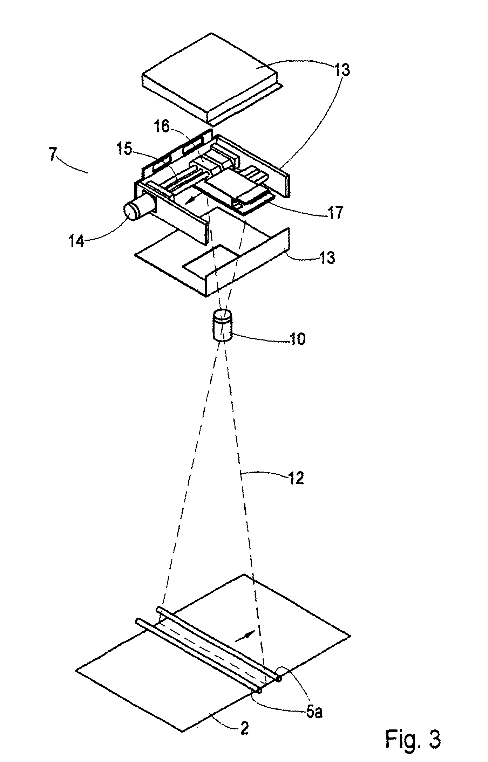

Eine detailliertere Konstruktionsskizze des Scannerkopfes 7 ist in Fig. 3 gezeigt. In einem zerlegbaren Gehäuse 13 ist eine über einen Schrittmotor 14 und eine Gewindespindel 15 antreibbare Verschiebevorrichtung 16 montiert. Im Beispiel wurde eine eingängige Gewindespindel mit einer Steigung von 1 mm verwendet. Die Verschiebevorrichtung 16 verschiebt eine auf einer Platine 17 befestigte CCD-Zeile, die ihre Signale über eine nicht dargestellte Computerschnittstelle abgibt. Vor dem Scannen wird das abzutastende Objekt 2 über ein an einem in Fig. 1 dargestellten Faltenbalgauszug befestigtes Objektiv 10 scharf auf die CCD-Zeile abgebildet. Durch entsprechende Steuerung bzw. Ausführung der CCD-Zeile wird mit dem hier gezeigten Scannerkopf eine Auflösung von 10000 mal 15000 Pixeln erreicht. Die erreichte Farbtiefe beträgt 3 mal 12 bit.

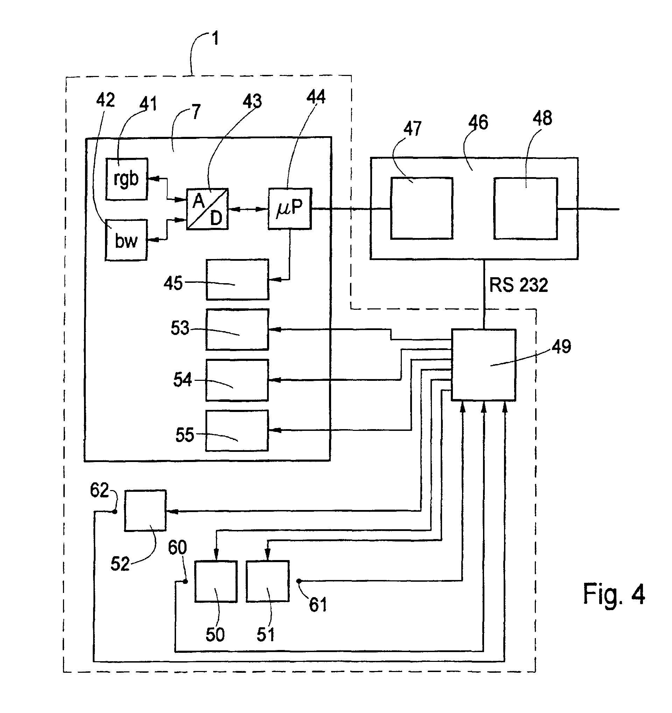

Fig. 4 zeigt anhand eines stark vereinfachten Blockschaltbildes, wie eine Steuereinrichtung 49 eines erfindungsgemäßen Scanners 1, der Scannerkopf 7 und diverse Antriebe 50 bis 55 der beweglichen Scannerteile mit einem handelsüblichen Personalcomputer 46 verbunden sind. Ein zeilenförmiger Farb-Sensor 41 und ein zeilenförmiger Schwarz-Weiß-Sensor 42 erzeugen Signale, die über einen Analog/Digital-Wandler 43 an einen eingebauten Prozessor 44 weitergeleitet werden. Der Prozessor 44 steuert die Signal-Ausgabe des Scannerkopfes 7 sowie den zur Bewegung der Sensoren 41, 42 vorgesehenen Schrittmotor 45. Die Bildsignale werden über eine Schnittstelle 47 an den Personalcomputer übermittelt. Zum Anschluß an ein Netzwerk verfügt der Personalcomputer zusätzlich noch über eine Netzwerkkarte 48, so daß die weitere Verarbeitung der Bildsignale in einem anderen Personalcomputer erfolgen kann.

Über eine RS232-Schnittstelle werden vom Personalcomputer Steuersignale an eine Steuereinrichtung 49 übermittelt, welche zur Steuerung der diversen Antriebe des Scanners dienen. Dazu ist die Steuereinrichtung relativ autark, so daß vom Personalcomputer nur Vorgaben für die einzelnen Antriebe ausgegeben zu werden brauchen und die Steuerung im einzelnen, beispielsweise Soll-/Istwert-Vergleiche, von der Steuereinrichtung vorgenommen wird. Die angesteuerten Antriebe sind: der Vertikalantrieb 50 und der Horizontalantrieb 51 der Scannerlampen 5a (Fig. 2), der Vertikalantrieb 52 des Scannerkopfes 7, der Antrieb 53 des Objektivabstandes, der Antrieb 54 eines optionalen Objektivrevolvers, sowie die Blendensteuerung 55 des jeweiligen Objektivs. Je nach Erfordernissen im einzelnen können den Antrieben Positionssensoren 60, 61, 62 zugeordnet sein, so daß für die betroffenen Antriebe die Steuereinrichtung als Regler arbeitet.

Wird beispielsweise am Personalcomputer die Größe einer zu scannenden Vorlage eingegeben, so berechnet dieser den Abbildungsmaßstab und die dafür erforderliche Position des Scannerkopfes und den Objektivabstand. Zur erfindungsgemäßen Bewegung der Scannerlampen wird ferner der zurückzulegende Weg und die Geschwindigkeit berechnet. Diese Daten werden dann der Steuereinrichtung 49 zugeführt, welche die Antriebe entsprechend steuert.

## Patentansprüche

1. Vorrichtung zum optischen Abtasten eines im wesentlichen flachen Objekts, bestehend aus einer Beleuchtungseinrichtung zur Beleuchtung des Objekts und einem in einem Abstand über dem feststehenden Objekt angeordneten zeilenförmigen elektrooptischen Sensor und einem zwischen Objekt und Sensor angeordneten und zur Abbildung eines Objektbereichs auf den Sensor ausgebildeten Objektiv, wobei Objekt und Sensor relativ zueinander zur zeilenweisen optischen Abtastung des Objekts parallel zur Objektebene linear verfahrbar sind, **dadurch gekennzeichnet, daß** der Sensor (11) in einem an einem Ausleger (6) befestigten Scannerkopf (7) angeordnet ist, daß die Beleuchtungseinrichtung (5) getrennt von dem Sensor (11) linear parallel zur Objektebene in einem Abstand zur Objektoberfläche, der klein ist im Vergleich zum Abstand zwischen Objektoberfläche und Sensor, beweglich geführt und zur Beleuchtung des jeweils abzutastenden zellenförmigen Objektbereichs ausgebildet ist, und daß die Beleuchtungseinrichtung (5) während des Abtastens derart parallel mit der Sensorbewegung synchronisiert über dem Objekt (2) verfahrbar ist, daß der durch das Objektiv (10) gerade erfaßte und auf den Sensor (11) abgebildete Bereich des Objekts (2) beleuchtet wird.

2. Vorrichtung nach Anspruch 1, **dadurch gekennzeichnet**, daβ die Beleuchtungseinrichtung (5) zur geichmäßigen Ausleuchtung unregelmäßig dicker Objekte bzw. zur Beeinflussung der Beleuchtungsstärke auch senkrecht zur Objektebene verfahrbar ist.

3. Vorrichtung nach einem der Ansprüche 1 oder 2, **dadurch gekennzeichnet, daß** die Beleuchtungseinrichtung (5) zum Ausgleich des Randabfalls des Objektivs senkrecht zur Objektebene verfahrbar ist.

4. Vorrichtung nach einem der vorhergehenden Ansprüche, **dadurch gekennzeichnet, daß** die Beleuchtungseinrichtung aus wenigstens zwei sich quer zur Abtastrichtung wenigstens über die Objektbreite erstreckenden Lampen (5a) besteht, deren Licht nach den dem Objekt (2) abgewandten Richtungen abgeschirmt ist und die symmetrisch um den jeweils abzutastenden Objektbereich derart angeordnet sind, daß ein zeilenförmiger Bereich zwischen den Lampen (5a) zur Durchführung des vom Objekt (2) in Richtung des Objektivs (10) zurückgestrahlten Lichts freigelassen ist.

5. Vorrichtung nach einem der vorhergehenden Ansprüche, **dadurch gekennzeichnet, daß** der Sensor eine parallel zur Objektebene linear bewegliche CCD-Zeile (11) ist, auf die die gesamte Breite eines zeilenförmigen Bereichs des Objekts (2) durch das Objektiv (10) abbildbar ist, daß das Objektiv (10) seitenverdrehend ist und daß die Beleuchtungseinrichtung (5) gegenläufig zu dem Sensor (11) verfahrbar ist.

6. Vorrichtung nach einem der vorhergehenden Ansprüche, **dadurch gekennzeichnet, daß** das Objektiv (10) und der Sensor (11) an einem gemeinsamen, vertikal verfahrbar montierten Gehäuse (7) über dem Objekt (2) angeordnet sind, wobei der Abstand des Objektivs (2) zu dem Sensor (11) über einen Auszug (8) variierbar ist.

7. Vorrichtung nach einem der vorhergehenden Ansprüche, **dadurch gekennzeichnet, daß** ein Regler (49) vorgesehen ist, der als Sollwert die mit dem Abbildungsmaßstab umgerechnete jeweilige Position des Sensors (11) und als Istwert ein Signal von einem der Beleuchtungseinrichtung (5) zugeordneten Positionssensor erhält und der eine Antriebseinrichtung (51) für die Beleuchtungseinrichtung (5) steuert.

## Claims

1. Device for optical scanning of an essentially flat object, consisting of a lighting device to light the object and a rectilinear electro-optical sensor arranged at a distance above the fixed object and a lens arranged between the object and the sensor made to reproduce an area of the object on the sensor, in which the object and the sensor can be moved linearly in relation to each other for rectilinear optical scanning of the object parallel to the plane of the object, **characterised by** the fact that the sensor (11 ) is arranged in a scanning head (7) fastened to a jib (6), the lighting device (5) may be moved separately from the sensor (11) and linearly parallel to the plane of the object at a distance from the surface of the object, which is small in comparison to the distance between the surface of the object and sensor, and it is made to light the relevant rectilinear area of the object to be scanned and the lighting device (5) can be moved during scanning in such a way that it is synchronised parallel to the movement of the sensor over the object (2), and the area of the object (2) which has just been registered by the lens (10) and reproduced on the sensor (11) is lit.

2. Device according to claim 1, **characterised by** the fact that the lighting device (5) can also be moved vertically to the plane of the object for even lighting of uneven thick objects or to influence the strength of the lighting.

3. Device according to one of claims 1 or 2, **characterised by** the fact that the lighting device (5) can be moved vertically to the plane of the object to compensate for the wastage at the edge of the lens.

4. Device according to one of the previous claims, **characterised by** the fact that the lighting device consists of at least two lights (5a) running diagonally to the scanning direction extending at least over the width of the object, the light from which is shielded in the directions turned away from the object (2) and which are arranged symmetrically around the relevant area of the object to be scanned in such a way that a rectilinear area is left free between the lights (5a) for the passage of the light reflected from the object (2) in the direction of the lens (10).

5. Device according to one of the previous claims, **characterised by** the fact that the sensor is a CCD line (11) which can be moved linearly parallel to the plane of the object, on which the whole width of a rectilinear area of the object (2) can be reproduced by the lens (10), the lens (10) can be twisted at the side and the lighting device (5) can be moved contrary to the sensor (11).

6. Device according to one of the previous claims, **characterised by** the fact that the lens (10) and the sensor (11) are arranged in a joint housing (7) which is fitted to move vertically over the object (2), in which the distance from the lens (2) to the sensor (11) can be varied though an extension (8).

7. Device according to one of the previous claims, **characterised by** the fact that a regulator (49) is provided, which receives the relevant position of the sensor (11 ) converted with the reproduction scale as the theoretical value and a signal from a position sensor allocated to the lighting device (5) as the actual value and which controls a drive device (51) for the lighting device (5).

## Revendications

1. Appareil pour balayer optiquement un objet essentiellement plat, composé d'un dispositif d'éclairage pour éclairer l'objet et d'un capteur électro-optique en forme de ligne, agencé à une certaine distance au-dessus de l'objet stationnaire, et d'un objectif, agencé entre l'objet et le capteur, conçu pour projeter sur le capteur une zone de l'objet, moyennant quoi l'objet et le capteur sont déplaçables relativement l'un par rapport à l'autre, de façon linéaire parallèlement au plan de l'objet, pour balayer optiquement ligne par ligne l'objet, **caractérisé en ce que** le capteur (11) est agencé dans une tête de scanneur (7) fixée à une console (6), **en ce que** le dispositif d'éclairage (5), indépendant du capteur (11), est guidé en mouvement de façon linéaire parallèlement au plan de l'objet, à une distance par rapport à la surface de l'objet qui, en comparaison avec la distance entre la surface de l'objet et le capteur, est petite, et est conçu pour éclairer respectivement la zone de l'objet à balayer ligne par ligne, et **en ce que** le dispositif d'éclairage (5), pendant le balayage, est déplaçable au-dessus de l'objet (2) de façon synchronisée et parallèlement au déplacement du capteur de telle sorte que la zone de l'objet (2) venant d'être traitée par l'objectif (10) et projetée sur le capteur (11), soit éclairée

2. Appareil selon la revendication 1, **caractérisé en ce que** le dispositif d'éclairage (5) est déplaçable également perpendiculairement par rapport au plan de l'objet afin d'éclairer uniformément des objets d'épaisseur irrégulière et/ou pour agir sur l'intensité d'éclairage.

3. Appareil selon l'une quelconque des revendications 1 ou 2, **caractérisé en ce que** le dispositif d'éclairage (5) est déplaçable perpendiculairement par rapport au plan de l'objet afin de compenser les pertes au bord de l'objectif.

4. Appareil selon l'une quelconque des revendications précédentes, **caractérisé en ce que** le dispositif d'éclairage se compose d'au moins deux lampes (5a) s'étendant transversalement par rapport au sens de balayage, au moins au-dessus de la largeur de l'objet, dont la lumière est protégée dans les directions opposées à l'objet (2) et qui sont agencées symétriquement autour de la zone de l'objet respectivement à balayer, de telle sorte qu'un champ en forme de ligne entre les lampes (5a) est laissé libre pour le passage des rayons lumineux réfléchis par l'objet (2) en direction de l'objectif (10) .

5. Appareil selon l'une quelconque des revendications précédentes, **caractérisé en ce que** le capteur est une ligne (11) de dispositif à transfert de charge mobile linéairement parallèlement au plan de l'objet, sur laquelle la totalité de la largeur d'une zone en forme de ligne de l'objet (2) peut être projetée par l'objectif (10), **en ce que** l'objectif (10) tourne latéralement et **en ce que** le dispositif d'éclairage, (5) est dépiaçable dans le sens contraire au capteur (11).

6. Appareil selon l'une quelconque des revendications précédentes, **caractérisé en ce que** l'objectif (10) et le capteur (11) sont agencés, au-dessus de l'objet (2), sur un boîtier (7) commun, monté de façon déplaçable verticalement, moyennant quoi la distance de l'objectif (2) par rapport au capteur (11) est variable au moyen d'un organe extensible (8).

7. Appareil selon l'une quelconque des revendications précédentes, **caractérisé en ce qu'**il est prévu un dispositif de réglage (49) qui reçoit, comme valeur de consigne, la position respective du capteur (11) calculée à l'aide de l'échelle de l'image, et, comme valeur réelle, un signal provenant d'un capteur de position asservi au dispositif d'éclairage (5), et commande un dispositif d'entraînement (51) du dispositif d'éclairage (5) .
